(19)

**Europäisches Patentamt**
**European Patent Office**
**Office européen des brevets**

(11) **EP 4 585 509 A1**

(12) **EUROPEAN PATENT APPLICATION**

(43) Date of publication:
**16.07.2025 Bulletin 2025/29**

(21) Application number: **25151604.3**

(22) Date of filing: **13.01.2025**

(51) International Patent Classification (IPC):
**B64C 11/30** $^{(2006.01)}$ **B64C 11/40** $^{(2006.01)}$

(52) Cooperative Patent Classification (CPC):
**B64C 11/40; B64C 11/303**

| (84) Designated Contracting States:<br>**AL AT BE BG CH CY CZ DE DK EE ES FI FR GB**<br>**GR HR HU IE IS IT LI LT LU LV MC ME MK MT NL**<br>**NO PL PT RO RS SE SI SK SM TR**<br>Designated Extension States:<br>**BA**<br>Designated Validation States:<br>**GE KH MA MD TN**<br><br>(30) Priority: **11.01.2024 US 202418410896** | (71) Applicant: **PRATT & WHITNEY CANADA CORP.**<br>**Longueuil, Québec J4G 1A1 (CA)**<br><br>(72) Inventor: **MEUNIER, Gabriel**<br>**(01BE5) Longueuil, J4G 1A1 (CA)**<br><br>(74) Representative: **Dehns**<br>**10 Old Bailey**<br>**London EC4M 7NG (GB)** |

(54) **METHOD AND SYSTEM FOR CONTROLLING A VARIABLE-PITCH PROPELLER WITH OIL LEAKAGE COMPENSATION**

(57) A propeller controller (62) for a variable-pitch propeller (24) of an aircraft (12) is provided. The controller (62) is configured to determine a requested oil flow ($WO_{REQ}$) for delivery to a hydraulic actuator (40) of the variable-pitch propeller (24) based on a speed error (E) between an actual rotational speed (NP) of the variable-pitch propeller (24) and a set point rotational speed ($NP_{REF}$) for the variable-pitch propeller (24), determine a requested oil flow ($WO_{REQ}$) for delivery to the hydraulic actuator (40) based on the speed error (E), determine a trimmed oil leakage rate ($WO_L$) out of the hydraulic actuator (40) by multiplying an estimated oil leakage rate ($L_{EST}$) out of the hydraulic actuator (40) by a leakage trim multiplier ($K_{LEAK}$) based on the speed error (E), and combine the trimmed oil leakage rate ($WO_L$) with the requested oil flow ($WO_{REQ}$) to generate a commanded oil flow ($WO_{CMD}$). The commanded oil flow ($WO_{CMD}$) is delivered to the hydraulic actuator (40) to adjust the pitch of the variable-pitch propeller (24).

FIG. 5

EP 4 585 509 A1

## Description

TECHNICAL FIELD

The invention relates generally to aircraft power plants, and more particularly to controlling a rotational speed of a variable-pitch propeller configured to propel an aircraft.

BACKGROUND

Some turboprop aircraft engines are equipped with a hydro-mechanical propeller governor to maintain a desired rotational speed of the propeller. The use of a digital speed control system to control oil flow to a hydraulic actuator of the variable-pitch propeller can provide operational advantages when controlling the rotational speed of the variable-pitch propeller. However, oil leakage out of the hydraulic actuator can cause difficulties in accurately controlling the propeller speed using a digital speed control system. Improvement is desirable.

SUMMARY

In one aspect, the invention describes a method for controlling an actual rotational speed of a variable-pitch propeller of an aircraft where a pitch of the variable-pitch propeller is adjustable using a hydraulic actuator. The method comprises:

determining a speed error between the actual rotational speed of the variable-pitch propeller and a set point rotational speed for the variable-pitch propeller;

determining a requested oil flow for delivery to the hydraulic actuator based on the speed error;

determining an estimated oil leakage rate out of the hydraulic actuator;

determining a leakage trim multiplier having a value based on the speed error;

determining a trimmed oil leakage rate out of the hydraulic actuator by multiplying the estimated oil leakage rate by the leakage trim multiplier;

adding the trimmed oil leakage rate to the requested oil flow to generate a commanded oil flow; and

delivering the commanded oil flow to the hydraulic actuator to adjust the pitch of the variable-pitch propeller and correct the speed error.

Optionally, and in accordance with the above, the requested oil flow may be determined using a feedback controller that is devoid of an integral term.

Optionally, and in accordance with any of the above, the feedback controller may be a proportional-derivative feedback controller.

Optionally, and in accordance with any of the above, the leakage trim multiplier is based on a time integral of the speed error.

Optionally, and in accordance with any of the above, the method may comprise determining the leakage trim multiplier by:

when the speed error is smaller than a threshold, updating the leakage trim multiplier using the speed error; and

when the speed error is greater than the threshold, updating the leakage trim multiplier using a speed error of zero.

Optionally, and in accordance with any of the above, the method may comprise determining the leakage trim multiplier by multiplying the time integral of the speed error by a gain that is not equal to one.

Optionally, and in accordance with any of the above, multiplying the time integral of the speed error by the gain may provide an intermediate multiplier. When the intermediate multiplier is greater than a prescribed maximum value, the leakage trim multiplier may be set to the prescribed maximum value.

Optionally, and in accordance with any of the above, the method may comprise determining the requested oil flow using a proportional-derivative feedback controller that is devoid of an integral term.

Optionally, and in accordance with any of the above, estimating the estimated oil leakage rate may include computing a laminar oil flow between two parallel plates based on a pressure inside the hydraulic actuator and a temperature of an oil supply for hydraulic actuator.

Optionally, and in accordance with any of the above, the method may comprise determining the leakage trim multiplier by:

integrating the speed error over time to obtain a time integral of the speed error; and

multiplying the time integral of the speed error by a gain.

Optionally, and in accordance with any of the above, the method may comprise determining the requested oil flow using a proportional-derivative feedback controller that is devoid of an integral term, wherein the leakage trim multiplier is based on a time integral of the speed error.

Embodiments may include combinations of the above features.

In another aspect, the invention describes a system for controlling a sensed rotational speed of a variable-pitch propeller of an aircraft. The system may comprise:

a sensor for sensing the sensed rotational speed of the variable-pitch propeller;

a hydraulic actuator for adjusting a pitch of blades of the variable-pitch propeller;

a valve for adjusting a flow of oil to the hydraulic actuator; and

one or more controllers operatively connected to the sensor and to the valve, the one or more controllers being configured to:

determine a speed error between the sensed rotational speed of the variable-pitch propeller and a set point rotational speed for the variable-pitch propeller;

use the speed error to determine a requested oil flow for delivery to the hydraulic actuator;

determine a trimmed oil leakage rate out of the hydraulic actuator by multiplying an estimated oil leakage rate out of the hydraulic actuator by a leakage trim multiplier having a value determined as a function of the speed error;

add the trimmed oil leakage rate to the requested oil flow to generate a commanded oil flow; and

cause the valve to deliver the commanded oil flow to the hydraulic actuator to adjust the pitch of the blades of the variable-pitch propeller and correct the speed error.

Optionally, and in accordance with any of the above, the one or more controllers may be configured to determine the requested oil flow without use of an integral term.

Optionally, and in accordance with any of the above, the one or more controllers may be configured to determine the requested oil flow with the use of a proportional term and a derivative term.

Optionally, and in accordance with any of the above, the one or more controllers may be configured to determine the leakage trim multiplier by integrating the speed error over time.

Optionally, and in accordance with any of the above, the one or more controllers may be configured to determine the leakage trim multiplier by:

when the speed error is indicative of a steady state operation of a power plant including the variable-pitch propeller, updating the leakage trim multiplier based on the speed error; and

when the speed error is indicative of a transient operation of the power plant, updating the leakage trim multiplier based on a speed error of zero.

Optionally, and in accordance with any of the above, the one or more controllers may be configured to determine the leakage trim multiplier by:

determining an intermediate multiplier by integrating the speed error over time;

when the intermediate multiplier is greater than a prescribed maximum value, setting the leakage trim multiplier to the prescribed maximum value;

when the intermediate multiplier is smaller than a prescribed minimum value, setting the leakage trim multiplier to the prescribed minimum value; and

when the intermediate multiplier is between the prescribed maximum value and the prescribed minimum value, setting the leakage trim multiplier to the intermediate multiplier.

Embodiments may include combinations of the above features.

In a further aspect, the invention describes a power plant for propelling an aircraft. The power plant comprises:

a variable-pitch propeller configured to propel the aircraft;

a hydraulic actuator for adjusting a pitch of the variable-pitch propeller;

a source of motive power configured to drive the variable-pitch propeller; and

a propeller controller operatively connected to the variable-pitch propeller and configured to:

determine a requested oil flow for delivery to the hydraulic actuator based on a speed error indicative of a difference between a set point rotational speed for the variable-pitch propeller and an actual rotational speed of the variable-pitch propeller;

determine a requested oil flow for delivery to the hydraulic actuator based on the speed error;

determine a trimmed oil leakage rate out of the hydraulic actuator by multiplying an estimated oil leakage rate out of the hydraulic actuator by a leakage trim multiplier that is based on the speed error;

combine the trimmed oil leakage rate with the requested oil flow to generate a commanded oil flow; and

cause the commanded oil flow to be delivered to the hydraulic actuator to adjust the pitch of the variable-pitch propeller and correct the speed error.

Optionally, and in accordance with any of the above, the propeller controller may be configured to:

determine the requested oil flow with a use of a proportional term and a derivative term, and without a use of an integral term; and

determine the leakage trim multiplier by integrating the speed error over time.

Optionally, and in accordance with any of the above, the leakage trim multiplier may be equal to a time integral of the speed error multiplied by a gain.

Embodiments may include combinations of the above features.

Further details of these and other aspects of the subject matter of this application will be apparent from the detailed description included below and the drawings.

DESCRIPTION OF THE DRAWINGS

Reference is now made to the accompanying drawings, in which:

FIG. 1 is a schematic axial cross-section view of an aircraft power plant with a propeller system as described herein;

FIG. 2 is a schematic illustration of an exemplary propeller system of the aircraft power plant of FIG. 1;

FIG. 3 is a schematic illustration of an exemplary propeller controller of the propeller system of FIG. 2;

FIG. 4 is a flow diagram of a method of controlling a rotational speed of a variable-pitch propeller of an aircraft;

FIG. 5 is another schematic illustration of the propeller controller of FIG. 3;

FIG. 6 is a schematic illustration of an exemplary oil leakage compensator of the controller of FIG. 5;

FIG. 7 is a schematic illustration of an exemplary leakage trim function of the oil leakage compensator of FIG. 6; and

FIG. 8 is a schematic illustration of an exemplary leakage estimation function of the oil leakage compensator of FIG. 6.

DETAILED DESCRIPTION

The present invention describes systems and methods for controlling a rotational speed of a variable-pitch propeller of an aircraft. In some embodiments, the systems and methods described herein may provide benefits associated with a digital speed control system while reducing steady state speed errors that can be associated with oil leakage out of a hydraulic actuator configured to adjust the pitch of the variable-pitch propeller, and also while maintaining a desired stability of a feedback controller of the digital speed control system. For example, the systems and methods described herein may use an enhanced leakage estimation of the flow (i.e., rate) of oil leaking out of the hydraulic actuator. The enhanced leakage estimation may be determined outside of the main feedback controller of the digital speed control system and may be based on a time integral (i.e., integral with respect to time) of the speed error. In some embodiments, this may allow the main feedback controller to be devoid of an integral term, which may in turn promote a stability of the main feedback controller.

Aspects of various embodiments are described through reference to the drawings.

The term "connected" may include both direct connection (in which two elements contact each other) and indirect connection (in which at least one additional element is located between the two elements). The term "substantially" as used herein may be applied to modify any quantitative representation which could permissibly vary without resulting in a change in the basic function to which it is related.

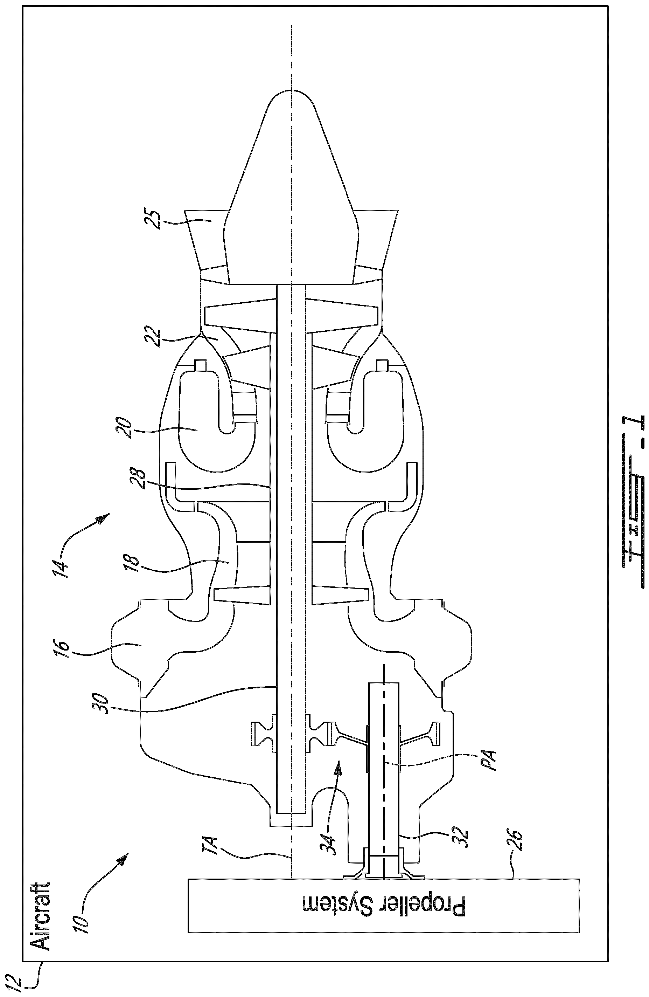

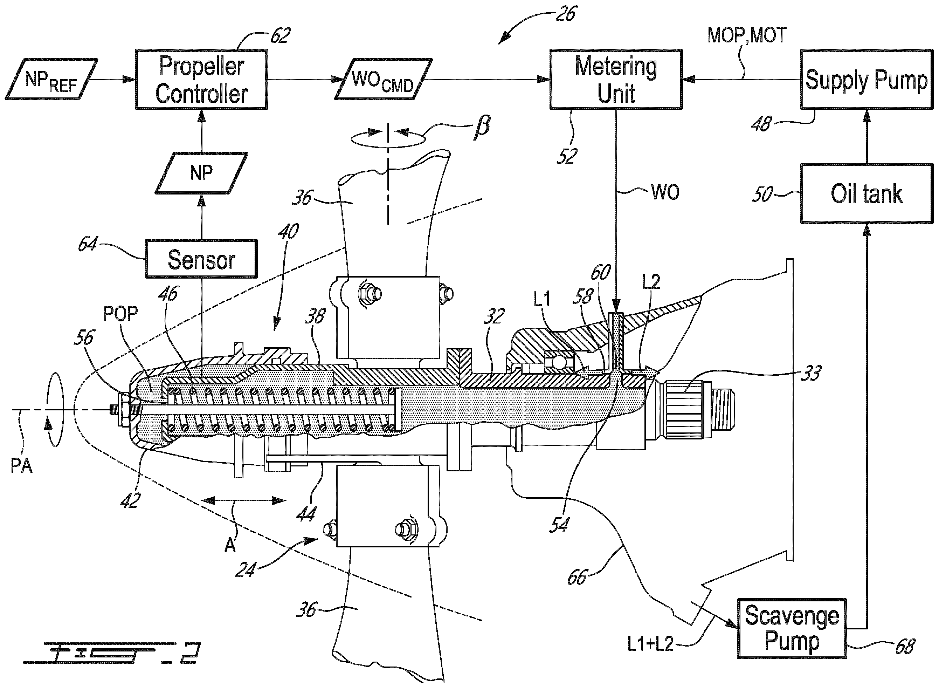

FIG. 1 is an axial cross-sectional view of aircraft power plant 10 (referred hereinafter as "power plant 10") as described herein. Power plant 10 may be used to propel aircraft 12 during one or more phases of operation (e.g., flight) of aircraft 12. In some embodiments, aircraft 12 may be a fixed wing (e.g., turboprop) aircraft. Aircraft 12 may include one or more power plants 10 for propelling aircraft 12. As illustrated in FIG. 1, power plant 10 may be a turboprop power plant including gas turbine engine 14 (referred hereinafter as "engine 14"). Engine 14 may be of a type preferably provided for use in subsonic flight. Engine 14 may include (e.g., radial) air inlet 16 into which ambient air is received and conveyed toward compressor 18. In some embodiments, compressor 18 may be a multistage compressor that pressurized the air received via air inlet 16. Engine 14 may include combustor 20 in which the compressed air received from compressor 18 is mixed with a combustible fuel delivered from a fuel tank and ignited to generate an annular stream of hot combustion gas. Engine 14 may include turbine section 22 to extract energy from the combustion gas and convert the energy into motive power to drive an air mover such as propeller 24 (shown in FIG. 2) and thereby propel aircraft 12. The combustion gas may be exhausted from engine 14 via exhaust duct 25. Propeller 24 may be part of propeller system 26 shown schematically in FIG. 1.

In various embodiments, engine 14 may be a single spool gas turbine engine or a multi-spool gas turbine engine. For example, engine 14 may include a high-pressure spool including one or more high-pressure turbines of turbine section 22, high-pressure shaft 28 and one or more stages of compressor 18. The high-pressure turbine may drive the rotation of high-pressure shaft 28. Engine 14 may include a low-pressure spool that is separately rotatable from the high-pressure spool. In other words, the high-pressure spool and the low-pressure spool may be mechanically disconnected to permit one spool to freely rotate relative to the other. The low-pressure spool may include one or more low-pressure turbines, low-pressure shaft 30 and optionally one or more stages of compressor 18. In some embodiments, high-pressure shaft 28 and low-pressure shaft 30 may be coaxial where high-pressure shaft 28 may be hollow to permit the passage of low-pressure shaft 30 therethrough. The low-pressure turbine may be rotatable about turbine axis TA and may drive the rotation of low-pressure shaft 30 and may also drive the rotation of propeller 24. Propeller 24 may be supported by propeller shaft 32, which may be in torque transmitting engagement with low-pressure shaft 30 via gear train 34. Propeller shaft 32 and propeller 24 may be rotatable about propeller axis PA, which may be parallel to and offset from turbine axis TA. In other embodiments, propeller 24 and low-pressure shaft 30 may be coaxial. In some embodiments, gear train 34 may be of a speed-reducing type so that the rotational speed of propeller shaft 32 may be lower than the rotational speed of low-pressure shaft 30 and of the low-pressure turbine during operation of power plant 10. Gear train 34 may be part of a speed-reducing gear box also known as a reduction gear box (RGB).

Propeller system 26 may be integrated into other types of power plants not necessarily including a gas turbine engine. For example, in some embodiments, power plant 10 may include one or more sources of motive power drivingly connectable to propeller 24. Source(s) of motive power may include an electric motor (not shown) and/or a thermal engine such as a piston engine or a rotary (e.g., Wankel) engine drivingly connected to propeller 24. In some embodiments, power plant 10 may be a hybrid power plant including an electric motor and a thermal engine that may drive propeller 24 separately and/or together.

FIG. 2 is a schematic illustration of an exemplary propeller system 26 of power plant 10. FIG. 2 includes a partial side cutaway view showing an interior of hydraulic actuator 40. Propeller system 26 may include propeller 24 and a control architecture suitable for controlling an actual (i.e., sensed) rotational speed of propeller 24 during operation of aircraft 12. Propeller 24 may be a bladed rotor including (e.g., three, four or more) blades 36 extending radially outwardly from hub 38 and rotatable with propeller shaft 32 about propeller axis PA. Propeller shaft 32 may be in torque-transmitting engagement with engine 14 or another source of motive power via (e.g., splined) interface 33. Hub 38 may be fixedly connected (e.g., fastened) to propeller shaft 32. Blades 36 may also be pivotally adjustable relative to hub 38 so that pitch angle β (also called "beta" angle) of blades 36 (also referenced herein as "propeller pitch") may be controllably adjusted. Blades 36 may be adjustable within a range of pitch angles β to correspondingly modulate the angle of attack of blades 36 and vary the amount of forward thrust or reverse thrust depending the selected mode of operation of propeller 24. Blades 36 may also be adjustable to a feather position (also known as "feathering") where blades 36 are turned so that the leading edges are pointed essentially in the direction of flight. In this position, the aerodynamic forces on propeller 24 may result in a relatively low drag condition. Feathering may be employed if power plant 10 must be shut down during flight for example.

Pitch angle β of blades 36 may be controllably varied to vary a rotational speed of propeller 24 for a selected power output from engine 14. Reducing (fining) pitch angle β may reduce the resistance to rotation and may result in a rotational speed increase. On the other hand, increasing (coarsing) pitch angle β toward the feather position may increase the resistance to rotation and may result in a rotational speed decrease.

In case of a turboprop installation, a power (i.e., throttle) lever may be adjusted by a pilot of aircraft 12 to select a desired output power from engine 14, and a separate condition lever may be adjusted by the pilot of aircraft 12 to separately select a desired set point rotational speed $NP_{REF}$ of propeller 24. The selected output power from engine 14 in combination with the set point rotational speed $NP_{REF}$ of propeller 24 may dictate the output thrust generated by power plant 10. In some embodiments, functionalities of the power lever and the condition lever may be combined into a single (e.g., thrust) lever and a desired set point rotational speed $NP_{REF}$ may be derived from a position of the thrust lever. In various embodiments, set point rotational speed $NP_{REF}$ may be predetermined or selected by the flight crew via any suitable interface. In some embodiments, set point rotational speed $NP_{REF}$ may be selected automatically by a computer of aircraft 12 based on one or more inputs.

Pitch angle β of blades 36 may be adjusted using hydraulic actuator 40 defined by hollow hub 38 (also known as "spider hub") and dome 42. An interior of dome 42 may be in fluid communication with an interior of hub 38 so that oil delivered to the interior of hub 38 may flow into the interior of dome 42 and cause dome 42 to move relative to hub 38 axially away (i.e., forward) of propeller 24 along axial direction A. Dome 42 may be connected to blades 36 via one or more levers 44 that are pivotally connected to both dome 42 and blades 36. In some embodiments, each blade 36 may be operatively connected to dome 42 via a respective levers 44. Axial translation of dome 42 relative to hub 38 may cause pivoting of blades 36 to thereby change pitch angle β of blades 36.

Hydraulic actuator 40 may be single-acting so that as hydraulic fluid (oil) is delivered to the interior of hub 38, dome 42 is displaced forwardly to thereby compress spring 46. However, as oil is released from (e.g., leaks out of) the interior of hub 38, spring 46 urges dome 42 to return and move rearwardly relative to hub 38 toward propeller 24 and thereby forces oil out of hydraulic actuator 40 by way of oil leakage L1, L2. In some embodiments, the rearward movement of dome 42 may cause pitch angle β of blades 36 to move toward the feather position so that in the event of failure preventing oil from being delivered to actuator 40 during flight, pitch angle β of blades 36 may automatically default toward the feather position to reduce drag during flight.

Oil may be delivered to the interior of hub 38 using a suitable hydraulic system to alter pitch angle β of blades 36 to thereby obtain a desired rotational speed of propeller 24. Supply pump 48 may receive oil from oil tank 50 and drive the oil to metering unit 52, which may control delivered oil flow WO to actuator 40. Metering unit 52 may be part of a propeller control unit (PCU). Metering unit 52 may include one or more controllable (throttling) valves that may be controllably adjusted to control delivered oil flow (i.e., rate) WO to actuator 40. In some embodiments, metering unit 52 may include an electro-hydraulic servo valve (EHSV) for example. In some embodiments, metering unit 52 may include a pump for increasing the pressure of the oil beyond main oil pressure MOP. The oil from metering unit 52 may be delivered to the interior of hub 38 via an interior of propeller shaft 32 and one or more radial openings 54 (referred hereinafter in the singular) establishing fluid communication between metering unit 52 and the interior of propeller shaft 32. The interior of propeller shaft 32 may be in fluid communication with the interior of hub 38 and with the interior of dome 42 via axial opening 56 formed in the axial end of hub 38.

Sleeve 58 may define a fluid transfer interface between metering unit 52 and radial opening 54 of propeller shaft 32. For example, sleeve 58 may be stationary relative to rotating propeller shaft 32. Sleeve 58 and propeller shaft 32 may define a rotary union or rotary joint permitting oil transfer from the stationary sleeve 58 to the rotating propeller shaft 32. Sleeve 58 may be adjacent an exterior of propeller shaft 32. Oil delivery port 60 extending radially through sleeve 58 may be disposed axially between a forward part of sleeve 58 and an aft part of sleeve 58 and may be in axial alignment with radial opening 54 of propeller shaft 32. The forward part of sleeve 58 may extend axially and be disposed forwardly of radial opening 54. The aft part of sleeve 58 may extend axially and be disposed aft of radial opening 54. Sleeve 58 and the exterior of propeller shaft 32 may define a relatively small radial gap therebetween to permit some oil leakage L1, L2 out of hydraulic actuator 40. Oil leakage L1, L2 may be desired to ensure that propeller 24 may, through the action of spring 46, return to the feather position in case of an actuation failure. The radial gap between sleeve 58 and propeller shaft 32 may be selected to provide a prescribed target for the amount of oil leakage L1, L2 under one or more operating conditions. However, dimensional tolerances and variations in manufacturing/assembly can result in slight engine-to-engine variations in the amount of oil leakage L1, L2 between sleeve 58 and propeller shaft 32.

Propeller system 26 may include propeller controller 62 configured to control the rotational speed of propeller 24. Propeller controller 62 may be implemented digitally and may facilitate the use of more sophisticated control algorithms including lead-lag compensation for example. As explained in more details below, propeller controller 62 may take into account the amount of oil leakage L1, L2 to improve accuracy and correct (i.e., reduce or eliminate) the (e.g., steady state) error in the rotational speed of propeller 24 that could otherwise occur throughout the operational envelope of aircraft 12 without such leakage compensation.

Propeller system 26 may include one or more sensors 64 (referred hereinafter in the singular) suitable for generating one or more signals indicative of the actual (i.e., sensed) rotational speed NP of propeller 24. In some embodiments, sensor 64 may be a Hall effect sensor, a magnetoresistive sensor or other suitable proximity sensor. In some embodiments, sensor 64 may work in combination with a phonic wheel including one or more targets that are detected by sensor 64 as propeller shaft 32 and the phonic wheel rotate together.

Propeller controller 62 may consider the actual rotational speed NP in relation to set point rotational speed $NP_{REF}$ and issue commanded oil flow $WO_{CMD}$ to metering unit 52, which may then cause delivered oil flow WO to be delivered to actuator 40. Delivered oil flow WO may correspond to commanded oil flow $WO_{CMD}$. Propeller controller 62 may attempt to reduce the difference between actual rotational speed NP and set point rotational speed $NP_{REF}$ through the issuance of commanded oil flow $WO_{CMD}$.

The oil that leaks out of actuator 40 between sleeve 58 and propeller shaft 32 (i.e., oil leakage L1, L2) may be collected into a sump defined by housing 66, optionally filtered and reused. For example, scavenge pump 68 may drive the oil collected into housing 66 back to oil tank 50.

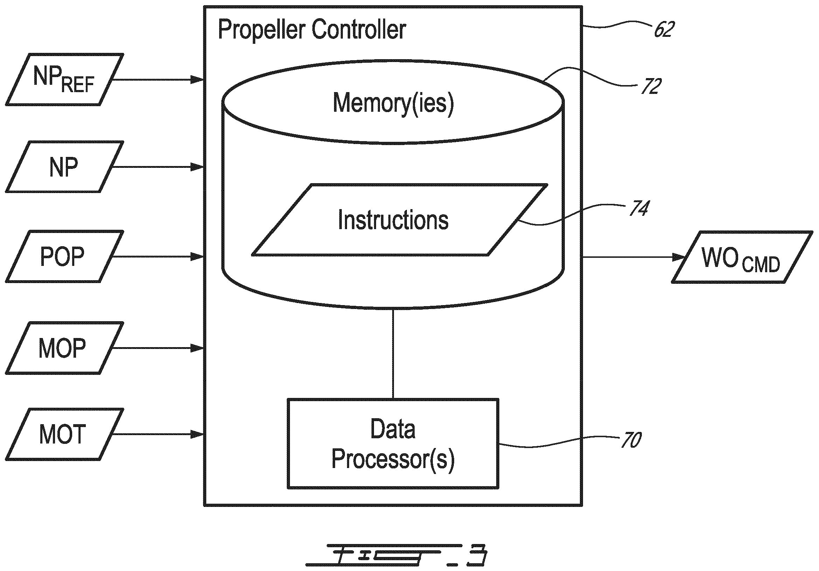

FIG. 3 is a schematic illustration of an exemplary propeller controller 62 for controlling the rotational speed of propeller 24 be generating commanded oil flow $WO_{CMD}$ used to control delivered oil flow WO to actuator 40. Controller 62 may include one or more data processors 70 (referred hereinafter in the singular) and non-transitory machine-readable memory(ies) 72 (referred hereinafter in the singular). Controller 62 may be configured to regulate the rotational speed of propeller 24 and optionally also perform other tasks. Controller 62 may receive input(s) such as set point rotational speed $NP_{REF}$, actual rotational speed NP via sensor 64, propeller oil pressure POP, main oil pressure MOP and main oil temperature MOT for example, to perform one or more procedures or steps defined by instructions 74 stored in memory 72 and executable by processor(s) 70 to generate one or more outputs such as commanded oil flow $WO_{CMD}$.

Processor(s) 70 may include any suitable device(s) configured to cause a series of steps to be performed by controller 62 so as to implement a controller-implemented process such that instructions 74, when executed by controller 62 or other programmable apparatus, may cause the functions/acts specified in the methods described herein to be executed. Processor(s) 70 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 72 may include any suitable machine-readable storage medium. Memory 72 may include non-transitory controller readable storage medium such as, for example, but not limited to, an electronic, magnetic, optical, electromagnetic, infrared, or semiconductor system, apparatus, or device, or any suitable combination of the foregoing. Memory 72 may include any storage means (e.g., devices) suitable for retrievably storing machine-readable instructions 74 executable by processor(s) 70.

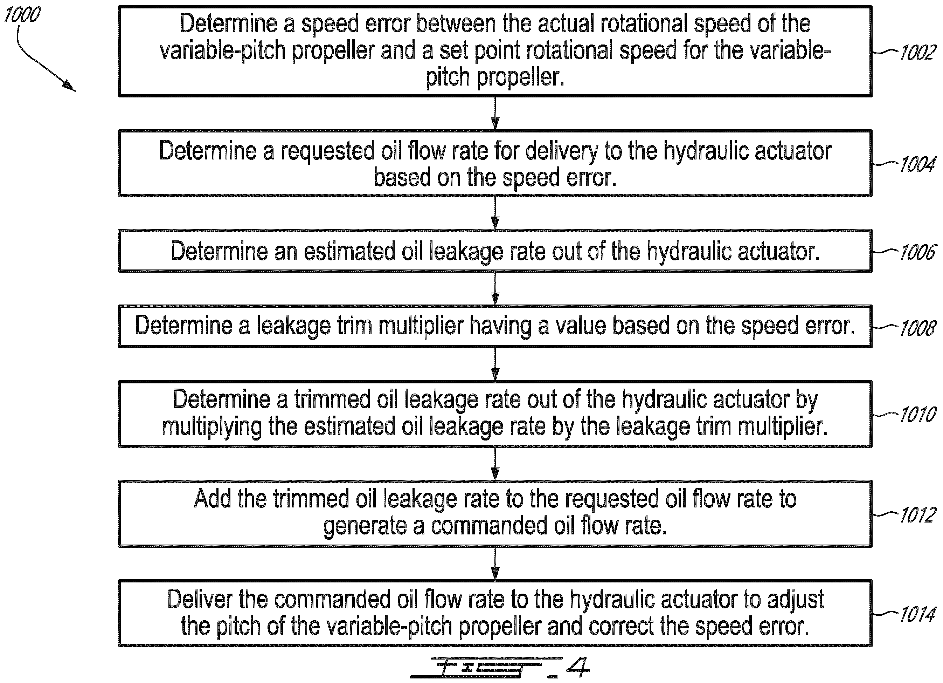

FIG. 4 is a flow diagram illustrating a method 1000 of controlling a rotational speed of variable-pitch propeller 24 (adjustable using hydraulic actuator 40) of aircraft 12, or another variable-pitch propeller. Method 1000 may be performed using propeller controller 62 of propeller system 26 described herein or using another system. For example, machine-readable instructions 74 may be configured to cause propeller controller 62 to perform some or all of method 1000. Method 1000 may include elements of propeller system 26 and/or other actions disclosed herein. Method 1000 may include:

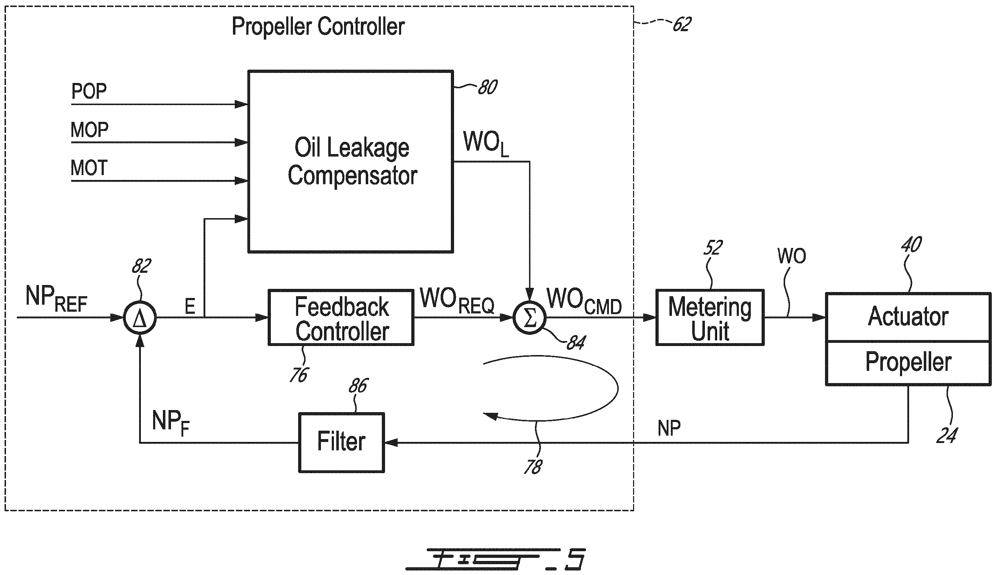

determining speed error E (shown in FIG. 5) between actual rotational speed NP of variable-pitch propeller 24 and set point rotational speed $NP_{REF}$ for variable-pitch propeller 24 (block 1002);

determining requested oil flow $WO_{REQ}$ for delivery to hydraulic actuator 40 based on (e.g., as a function of) speed error E (block 1004);

determining an estimated oil leakage rate $L_{EST}$ out of hydraulic actuator 40 (block 1006);

determining a leakage trim multiplier $K_{LEAK}$ having a value based on speed error E (block 1008);

determining a trimmed oil leakage rate $WO_L$ out of hydraulic actuator 40 by multiplying the estimated oil leakage rate $L_{EST}$ by the leakage trim multiplier $K_{LEAK}$ (block 1010);

adding the trimmed oil leakage rate $WO_L$ to the requested oil flow $WO_{REQ}$ to generate a commanded oil flow $WO_{CMD}$ (block 1012); and

delivering the commanded oil flow $WO_{CMD}$ to hydraulic actuator 40 to adjust the pitch of the variable-pitch propeller 24 and correct speed error E (block 1014).

Aspects of method 1000 are described below in reference to the subsequent figures.

FIG. 5 is another schematic illustration of propeller controller 62 shown as being operatively connected to metering unit 52, actuator 40 and propeller 24. The dynamics from oil flow WO to a physical change in the propeller rotational speed NP are represented in blocks labelled as actuator 40 and propeller 24. Propeller controller 62 may include main feedback controller 76, which may be part of a main feedback loop 78 that is used to control the rotational speed of propeller 24 in a closed loop manner. Propeller controller 62 may include oil leakage compensator 80 that is integrated with main feedback loop 78 and that is used to compute trimmed oil leakage rate $WO_L$ for compensating for oil leakage L1, L2 between sleeve 58 and propeller shaft 32.

Main feedback loop 78 may include error junction 82 where actual rotational speed NP (or filtered actual rotational speed $NP_F$) of variable-pitch propeller 24 and set point rotational speed $NP_{REF}$ are received and combined to determine speed error E. For example, actual rotational speed NP may be subtracted from set point rotational speed $NP_{REF}$ and speed error E may be indicative of a difference between set point rotational speed $NP_{REF}$ and actual rotational speed NP. Using speed error E, feedback controller 76 may generate requested oil flow $WO_{REQ}$ based on speed error E for delivery to hydraulic actuator 40. In various embodiments, feedback controller 76 may use a proportional (P) term and/or a derivative (D) term to amplify speed error E and apply a correction via requested oil flow $WO_{REQ}$. In some embodiments, feedback controller 76 may be a one-term (e.g., P or D) feedback controller. In some embodiments, feedback controller 76 may be a two-term proportional-integral (PD) feedback controller. In some embodiments, feedback controller 76 may have scheduled gains applicable to different portions of the flight envelope of aircraft 12. In some embodiments, feedback controller 76 may be devoid of an integral term. In some embodiments, the lack of an integral term in feedback controller 76 may promote stability of feedback controller 76.

Oil leakage compensator 80 may receive speed error E and optionally other parameters such as propeller oil pressure POP, main oil pressure MOP and main oil temperature MOT and determine trimmed oil leakage rate $WO_L$ based on speed error E and optionally also on the other parameters. Trimmed oil leakage rate $WO_L$ may be indicative of an enhanced estimate of oil leakage L1, L2. Trimmed oil leakage rate $WO_L$ may be combined with requested oil flow $WO_{REQ}$ at summing junction 84. For example commanded oil flow $WO_{CMD}$ may be the sum of requested oil flow $WO_{REQ}$ and trimmed oil leakage rate $WO_L$. As explained above, commanded oil flow $WO_{CMD}$ may be converted to an electric signal used to control metering unit 52 to in turn deliver delivered oil flow WO to actuator 40 that is equivalent to commanded oil flow $WO_{CMD}$. The delivery delivered oil flow WO to actuator 40 may adjust the pitch and rotational speed of propeller 24 to attempt to correct speed error E.

The use of speed error E in the determination of trimmed oil leakage rate $WO_L$ by oil leakage compensator 80 may account for engine-to-engine variations in oil leakage L1, L2 to improve the speed correction functionality of feedback loop 78. The use of speed error E and optionally other parameters in the determination of trimmed oil leakage rate $WO_L$ may also improve the speed correction functionality of feedback loop 78 across the flight envelope of aircraft 12.

In some embodiments, actual rotational speed NP may optionally be filtered with filter 86 to produce filtered actual rotational speed $NP_F$ that is used for comparison with set point rotational speed $NP_{REF}$ at error junction 82. In various embodiments, filter 86 may be used to filter out noise and/or isolate components of signal(s) from sensor 64 that are of interest and that are indicative of actual rotational speed NP of propeller 24. In some embodiments, filter 84 may be a low-pass filter. In some embodiments, filter 84 have the following transfer function expressed in Laplace notation:

$$\frac{1}{\tau_{Np}s + 1}$$

where $\tau_{Np}$ is a time constant associated with propeller 24.

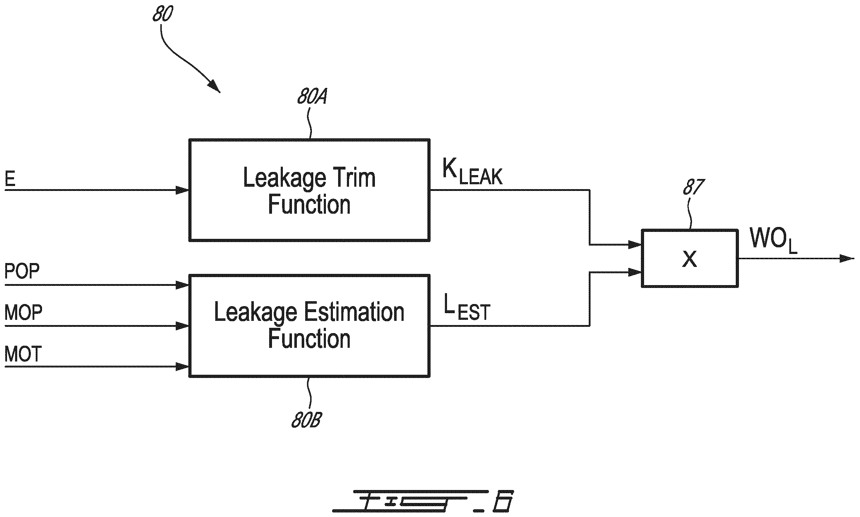

FIG. 6 is an exemplary schematic illustration of oil leakage compensator 80 of propeller controller 62. Oil leakage compensator 80 may include leakage trim function 80A that uses speed error E to calculate leakage trim multiplier $K_{LEAK}$. Oil leakage compensator 80 may also include leakage estimation function 80B that uses one or more parameters such as propeller oil pressure POP, main oil pressure MOP and main oil temperature MOT to calculate estimated oil leakage rate $L_{EST}$. Leakage estimation function 80B may provide some compensation for oil leakage L1, L2 but may not account for physical properties that can vary between engines and that can affect oil leakage L1, L2. Such physical properties may include engine-to-engine dimensional variations due to tolerance stack-up for example. Accordingly, the use of leakage estimation function 80B alone may potentially result in a steady state error in the rotational speed of propeller 24.

Leakage trim multiplier $K_{LEAK}$ may be used in combination with estimated oil leakage rate $L_{EST}$ to automatically adjust/correct estimated oil leakage rate $L_{EST}$ to more fully compensate for oil leakage L1, L2 and promote more accurate control of the rotational speed of propeller 24. Leakage trim multiplier $K_{LEAK}$ and estimated oil leakage rate $L_{EST}$ may be combined (e.g, multiplied) together at multiply junction 87 to generate trimmed oil leakage rate $WO_L$. Leakage trim multiplier $K_{LEAK}$ may serve as a correction factor that is applied to estimated oil leakage rate $L_{EST}$ based on the actual speed error E to provide an enhanced estimate of oil leakage L1, L2. Leakage trim function 80A and leakage estimation function 80B may be programmed in instructions 74 and carried out by propeller controller 62.

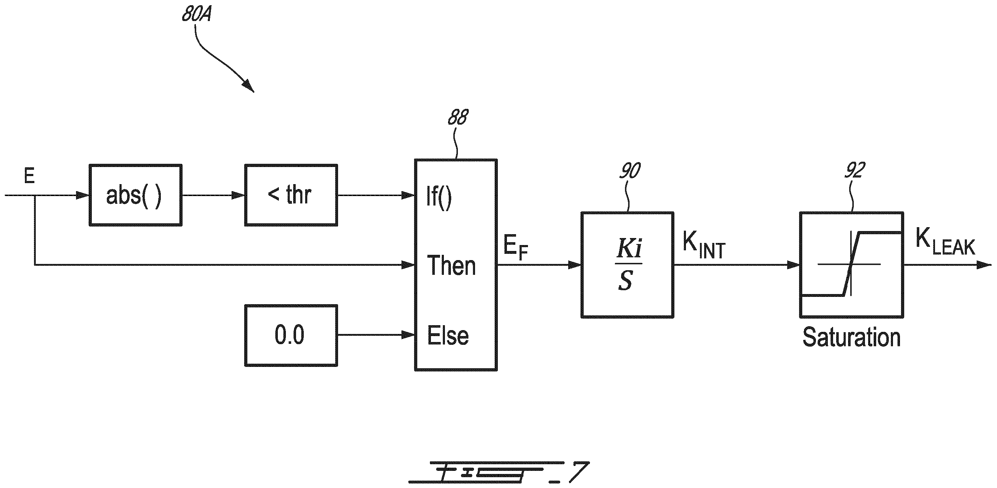

FIG. 7 is an exemplary schematic illustration of leakage trim function 80A of oil leakage compensator 80. Leakage trim function 80A may compute leakage trim multiplier $K_{LEAK}$ based on speed error E. In some embodiments, leakage trim function 80A may carry out a time integral of speed error E to compute leakage trim multiplier $K_{LEAK}$ and help correct speed error E. The use of oil leakage trim function 80A to carry out the time integral function outside of feedback controller 76 and of feedback loop 78 may permit more flexibility and control over values that are used in leakage trim function 80A, and also allows feedback controller 76 to retain the desirable stability of a P and/or D controller without an integral term.

Leakage trim function 80A may include switch 88 to determine a suitable course of action based on the magnitude of speed error E. For example, switch 88 may be used to activate leakage trim function 80A only to correct relatively small steady state speed errors. Accordingly, switch 88 may be used to deactivate leakage trim function 80A when speed error E is relatively large during a transient condition of power plant 10 for example.

When an absolute value of speed error E is smaller than a prescribed threshold, effective speed error $E_F$ in leakage trim function 80A may be set to the actual speed error E. The prescribed threshold may be set to a maximum error expected at steady state operation of power plant 10 and than may be due to inaccuracies in the estimated oil leakage rate $L_{EST}$ for example. In other words, the prescribed threshold may be set to an error value that is intended to exclude transient operating conditions of power plant 10 that result in intended acceleration or deceleration of propeller 24. When speed error E is indicative of a steady state operation of power plant 10, effective speed error $E_F$ may be set to actual speed error E and leakage trim multiplier $K_{LEAK}$ may be updated accordingly based on actual speed error E. However, when actual speed error E is indicative of a transient operation of power plant 10 where propeller 24 is intentionally being accelerated or decelerated, effective speed error $E_F$ may be set to zero and leakage trim multiplier $K_{LEAK}$ may be updated accordingly. Setting effective speed error $E_F$ to zero may result in the previous value of leakage trim multiplier $K_{LEAK}$ being retained until a new and smaller value of speed error E is received at leakage trim function 80A.

Effective speed error $E_F$ may then be provided to integrator 90, which may be implemented as a function whose output is a time integral of effective speed error $E_F$. Integrator 90 may accumulate effective speed error $E_F$ over a time period to produce intermediate multiplier $K_{INT}$ as a representative output. In some embodiments, integrator 90 may be implemented as a pure integral feedback controller that contains an integral term. In some embodiments, integrator 90 may optionally multiply the time integral of effective speed error $E_F$ by gain Ki that may not be equal to one to produce intermediate multiplier $K_{INT}$. In some embodiments, intermediate multiplier $K_{INT}$ may be determined by: integrating effective speed error $E_F$ over time to obtain a time integral of effective speed error $E_F$; and multiplying the time integral of effective speed error $E_F$ by gain Ki that is not equal to one. Setting effective speed error $E_F$ to zero via switch 88 may cause integrator 90 to keep its previous value of the time integral and consequently output the same intermediate multiplier $K_{INT}$.

Leakage trim function 80A may also include limiter 92 to prevent saturation effects that may occur when propeller system 26 reaches a physical limit. For example, limiter 92 may prevent leakage trim multiplier $K_{LEAK}$ from exceeding prescribed maximum or minimum values. In other words, limiter 92 may saturate leakage trim multiplier $K_{LEAK}$ to remain between the prescribed maximum or minimum values. After determining intermediate multiplier $K_{INT}$ by integrating effective speed error $E_F$ over time, intermediate multiplier $K_{INT}$ may be provided to limiter 92. When intermediate multiplier $K_{INT}$ is greater than a prescribed maximum value, leakage trim multiplier $K_{LEAK}$ may be set to the prescribed maximum value. When intermediate multiplier $K_{INT}$ is smaller than a prescribed minimum value, leakage trim multiplier $K_{LEAK}$ may be set to the prescribed minimum value. When intermediate multiplier $K_{INT}$ is between the prescribed maximum value and the prescribed minimum value, leakage trim multiplier $K_{LEAK}$ may be set to the value of intermediate multiplier $K_{INT}$.

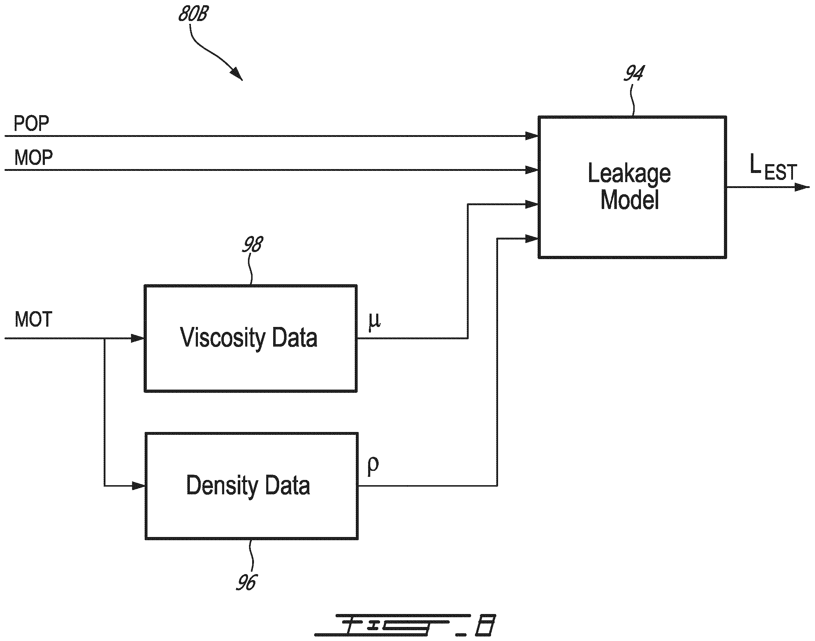

FIG. 8 is an exemplary schematic illustration of leakage estimation function 80B of oil leakage compensator 80. Leakage estimation function 80B may compute estimated oil leakage rate $L_{EST}$ based on one or more parameters such as propeller oil pressure POP, main oil pressure MOP and main oil temperature MOT for example. In some embodiments, the parameters used in leakage estimation function 80B may be typically sensed in a turboprop power plant so that propeller system 26 may not require special sensing to facilitate integration into existing or new power plants. In some embodiments, estimated oil leakage rate $L_{EST}$ may be computed using the approach described in US Patent No. 10,072,796 (Title: Metering of oil flow to engine propeller), which is incorporated herein by reference. Estimated oil leakage rate $L_{EST}$ may be an estimate of oil leakage L1, L2 between sleeve 58 and propeller shaft 32 based on operating parameters and geometric parameters of sleeve 58 and propeller shaft 32. For example, estimated oil leakage rate $L_{EST}$ may be determined using a suitable mathematical leakage model 94 that is determined empirically or through simulation and modelling. In some embodiments, oil leakage L1, L2 between sleeve 58 and propeller shaft 32 may be assumed to substantially correspond to a laminar flow between two parallel plates, which may be calculated using the following fluid dynamics equation:

$$L_{EST} = \frac{\pi}{12} \frac{\rho D c^3 \Delta P}{\mu L};$$

where $\rho$ is the density of the oil at the applicable temperature, D is the outer diameter of propeller shaft 32 that is inside and centered in a bore defined by sleeve 58, c is a size of a gap between a radially outer side of propeller shaft 32 and a radially inner side of sleeve 58 facing propeller shaft 32, $\Delta P$ is a pressure drop across the flow restriction (e.g., between an oil entrance to the gap between sleeve 58 and propeller shaft 32 and an oil exit from the gap between sleeve 58 and propeller shaft 32), $\mu$ is the dynamic viscosity of the oil at the applicable temperature, and L is an axial length of the gap that is travelled by the oil.

The geometric parameters such as outer diameter D of propeller shaft 32, size c of the gap and length L of the gap may be constant values stored in memory 72 and based on the construction of propeller system 26. Density $\rho$ may be determined based on main oil temperature MOT from a suitable function or look-up table represented as density data 96 in FIG. 8. Similarly, dynamic viscosity $\mu$ may be determined based on main oil temperature MOT from a suitable function or look-up table represented as viscosity data 98 in FIG. 8. $\Delta P$ may be estimated using propeller oil pressure POP inside of actuator 40 and a sump (e.g., atmospheric) pressure inside of housing 66 (shown in FIG. 2). In situations where oil leakage(s) L1 and/or L2 is/are discharged into a region at main oil pressure MOP, $\Delta P$ may be estimated by subtracting main oil pressure MOP from propeller oil pressure POP.

The embodiments described in this document provide non-limiting examples of possible implementations of the present technology. Upon review of the present invention, a person of ordinary skill in the art will recognize that changes may be made to the embodiments described herein without departing from the scope of the present technology.

**Claims**

1. A method for controlling an actual rotational speed (NP) of a variable-pitch propeller (24) of an aircraft (12) where a pitch of the variable-pitch propeller (24) is adjustable using a hydraulic actuator (40), the method comprising:

   determining a speed error (E) between the actual rotational speed (NP) of the variable-pitch propeller (24) and a set point rotational speed ($NP_{REF}$) for the variable-pitch propeller (24);

   determining a requested oil flow ($WO_{REQ}$) for delivery to the hydraulic actuator (40) based on the speed error (E);
   determining an estimated oil leakage rate ($L_{EST}$) out of the hydraulic actuator (40); determining a leakage trim multiplier ($K_{LEAK}$) having a value based on the speed error (E);
   determining a trimmed oil leakage rate ($WO_L$) out of the hydraulic actuator (40) by multiplying the estimated oil leakage rate ($L_{EST}$) by the leakage trim multiplier ($K_{LEAK}$); adding the trimmed oil leakage rate ($WO_L$) to the requested oil flow ($WO_{REQ}$) to generate a commanded oil flow ($WO_{CMD}$); and
   delivering the commanded oil flow ($WO_{CMD}$) to the hydraulic actuator (40) to adjust the pitch of the variable-pitch propeller (24) and correct the speed error (E).

2. The method as defined in claim 1, wherein the requested oil flow ($WO_{REQ}$) is determined using a feedback controller (76) that is devoid of an integral term, wherein, optionally, the feedback controller (76) is a proportional-derivative feedback controller.

3. The method as defined in claim 1 or 2, comprising determining the leakage trim multiplier ($K_{LEAK}$) by:

   when the speed error (E) is smaller than a threshold, updating the leakage trim multiplier ($K_{LEAK}$) using the speed error (E); and
   when the speed error (E) is greater than the threshold, updating the leakage trim multiplier ($K_{LEAK}$) using a speed error (E) of zero.

4. The method as defined in any preceding claim, wherein the leakage trim multiplier ($K_{LEAK}$) is based on a time integral of the speed error (E).

5. The method as defined in claim 4, comprising determining the leakage trim multiplier ($K_{LEAK}$) by multiplying the time integral of the speed error (E) by a gain that is not equal to one.

6. The method as defined in claim 4 or 5, wherein:

   multiplying the time integral of the speed error (E) by the gain provides an intermediate multiplier ($K_{INT}$); and
   when the intermediate multiplier ($K_{INT}$) is greater than a prescribed maximum value,
   setting the leakage trim multiplier ($K_{LEAK}$) to the prescribed maximum value.

7. The method as defined in any preceding claim, wherein estimating the estimated oil leakage rate ($L_{EST}$) includes computing a laminar oil flow between two parallel plates based on a pressure inside the hydraulic actuator (40) and a temperature of an oil supply for the hydraulic actuator (40).

8. The method as defined in any preceding claim, comprising determining the leakage trim multiplier ($K_{LEAK}$) by:

   integrating the speed error (E) over time to obtain a time integral of the speed error (E); and
   multiplying the time integral of the speed error (E) by a gain.

9. A system for controlling a sensed rotational speed (NP) of a variable-pitch propeller (24) of an aircraft (12), the system comprising:

   a sensor (64) for sensing the sensed rotational speed (NP) of the variable-pitch propeller (24);
   a hydraulic actuator (40) for adjusting a pitch of blades (36) of the variable-pitch propeller (24);
   a valve (52) for adjusting a flow of oil (WO) to the hydraulic actuator (40); and
   one or more controllers (62, 76) operatively connected to the sensor (64) and to the valve (52), the one or more controllers (62, 76) being configured to:

      determine a speed error (E) between the sensed rotational speed (NP) of the variable-pitch propeller (24) and a set point rotational speed ($NP_{REF}$) for the variable-pitch propeller (24);
      use the speed error (E) to determine a requested oil flow ($WO_{REQ}$) for delivery to the hydraulic actuator (40);
      determine a trimmed oil leakage rate ($WO_L$) out of the hydraulic actuator (40) by multiplying an estimated oil leakage rate ($L_{EST}$) out of the hydraulic actuator (40) by a leakage trim multiplier ($K_{LEAK}$) having a value determined as a function of the speed error (E);
      add the trimmed oil leakage rate ($WO_L$) to the requested oil flow ($WO_{REQ}$) to generate a commanded oil flow ($WO_{CMD}$); and
      cause the valve (52) to deliver the commanded oil flow ($WO_{CMD}$) to the hydraulic actuator (40) to adjust the pitch of the blades (36) of the variable-pitch propeller (24) and correct the speed error (E).

10. The system as defined in claim 9, wherein the one or more controllers (62, 76) are configured to determine the requested oil flow ($WO_{REQ}$) without the use of an integral term, wherein, optionally, the one or more controllers (62, 76) are configured to determine the requested oil flow ($WO_{REQ}$) with the use of a proportional term and a derivative term.

11. The system as defined in claim 9 and 10, wherein the one or more controllers (62, 76) are configured to determine the leakage trim multiplier ($K_{LEAK}$) by integrating the speed error (E) over time.

12. The system as defined in any of claims 9 to 11, wherein the one or more controllers (62, 76) are configured to determine the leakage trim multiplier ($K_{LEAK}$) by:

  when the speed error (E) is indicative of a steady state operation of a power plant (10) including the variable-pitch propeller (24), updating the leakage trim multiplier based on the speed error (E); and
  when the speed error (E) is indicative of a transient operation of the power plant (10), updating the leakage trim multiplier ($K_{LEAK}$) based on a speed error (E) of zero.

13. The system as defined in any of claims 9 to 12, wherein the one or more controllers (62, 76) are configured to determine the leakage trim multiplier ($K_{LEAK}$) by:

  determining an intermediate multiplier ($K_{INT}$) by integrating the speed error (E) over time; when the intermediate multiplier ($K_{INT}$) is greater than a prescribed maximum value, setting the leakage trim multiplier ($K_{LEAK}$) to the prescribed maximum value;
  when the intermediate multiplier ($K_{INT}$) is smaller than a prescribed minimum value, setting the leakage trim multiplier ($K_{LEAK}$) to the prescribed minimum value; and
  when the intermediate multiplier ($K_{INT}$) is between the prescribed maximum value and the prescribed minimum value, setting the leakage trim multiplier ($K_{LEAK}$) to the intermediate multiplier ($K_{INT}$).

14. A power plant (10) for propelling an aircraft (12), the power plant (10) comprising:

  a variable-pitch propeller (24) configured to propel the aircraft (12);
  a hydraulic actuator (40) for adjusting a pitch of the variable-pitch propeller (24);
  a source of motive power configured to drive the variable-pitch propeller (24); and
  a propeller controller (62) operatively connected to the variable-pitch propeller (24) and configured to:

    determine a requested oil flow ($WO_{REQ}$) for delivery to the hydraulic actuator (40) based on a speed error (E) indicative of a difference between a set point rotational speed ($NP_{REF}$) for the variable-pitch propeller (24) and an actual rotational speed (NP) of the variable-pitch propeller (24);
    determine a trimmed oil leakage rate ($WO_L$) out of the hydraulic actuator (40) by multiplying an estimated oil leakage rate ($L_{EST}$) out of the hydraulic actuator (40) by a leakage trim multiplier ($K_{LEAK}$) that is based on the speed error (E);
    combine the trimmed oil leakage rate ($WO_L$) with the requested oil flow ($WO_{REQ}$) to generate a commanded oil flow ($WO_{CMD}$); and
    cause the commanded oil flow ($WO_{CMD}$) to be delivered to the hydraulic actuator (40) to adjust the pitch of the variable-pitch propeller (24) and correct the speed error (E).

15. The power plant (10) as defined in claim 14, wherein:

  the propeller controller (62) is configured to determine the requested oil flow ($WO_{REQ}$) with the use of a proportional term and a derivative term, and without a use of an integral term, and determine the leakage trim multiplier ($K_{LEAK}$) by integrating the speed error (E) over time; and/or the leakage trim multiplier ($K_{LEAK}$) is equal to a time integral of the speed error (E) multiplied by a gain.

FIG. 1

FIG. 2

Propeller Controller 62

Memory(ies) 72

Instructions 74

NP$_{REF}$

NP

POP

WO$_{CMD}$

MOP

MOT

Data
Processor(s) 70

FIG.3

*1000*

Determine a speed error between the actual rotational speed of the variable-pitch propeller and a set point rotational speed for the variable-pitch propeller. —1002

Determine a requested oil flow rate for delivery to the hydraulic actuator based on the speed error. —1004

Determine an estimated oil leakage rate out of the hydraulic actuator. —1006

Determine a leakage trim multiplier having a value based on the speed error. —1008

Determine a trimmed oil leakage rate out of the hydraulic actuator by multiplying the estimated oil leakage rate by the leakage trim multiplier. —1010

Add the trimmed oil leakage rate to the requested oil flow rate to generate a commanded oil flow rate. —1012

Deliver the commanded oil flow rate to the hydraulic actuator to adjust the pitch of the variable-pitch propeller and correct the speed error. —1014

FIG. 4

EP 4 585 509 A1

Propeller Controller — 62

POP →

MOP →

MOT →

Oil Leakage Compensator — 80

$WO_L$

$NP_{REF}$ → Δ 82 → E → Feedback Controller 76 → $WO_{REQ}$ → Σ 84 → $WO_{CMD}$ → Metering Unit 52 → WO → Actuator — 40 / Propeller — 24

$NP_F$ ← Filter 86 ← NP 78

FIG.5

Fig. 6

EP 4 585 509 A1

$$E \rightarrow \boxed{\text{abs( )}} \rightarrow \boxed{< \text{thr}} \rightarrow$$

*80A*

*88*

If()

Then

Else

0.0

$E_F$

*90*

$$\frac{Ki}{S}$$

$K_{INT}$

*92*

Saturation

$K_{LEAK}$

FIG. 7

FIG. 8

Europäisches
Patentamt

European
Patent Office

Office européen
des brevets

## EUROPEAN SEARCH REPORT

**Application Number**

EP 25 15 1604

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 269 633 A1 (PRATT & WHITNEY CANADA [CA]) 17 January 2018 (2018-01-17) | 1-3,7,14 | INV. B64C11/30 |
| Y | * paragraph [0020] - paragraph [0038]; | 9,10,12 | B64C11/40 |
| A | figures 1-7 * | 4-6,8, 11,13,15 | |
| | ----- | | |
| Y | EP 3 835 199 B1 (PRATT & WHITNEY CANADA [CA]) 27 September 2023 (2023-09-27) * paragraph [0026] - paragraph [0034]; figures 1-3 * | 9,10,12 | |
| | ----- | | |

**TECHNICAL FIELDS SEARCHED (IPC)**

B64C

The present search report has been drawn up for all claims

| Place of search | Date of completion of the search | Examiner |
|---|---|---|
| Munich | 24 March 2025 | Lohse-Busch, Heike |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

# EP 4 585 509 A1

## ANNEX TO THE EUROPEAN SEARCH REPORT
## ON EUROPEAN PATENT APPLICATION NO.

EP 25 15 1604

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | Publication date | Patent family member(s) | Publication date |
|---|---|---|---|
| EP 3269633 A1 | 17-01-2018 | CA 2972718 A1 | 13-01-2018 |
| | | EP 3269633 A1 | 17-01-2018 |
| | | PL 3269633 T3 | 14-02-2022 |
| | | US 2018017209 A1 | 18-01-2018 |
| | | US 2019003642 A1 | 03-01-2019 |
| EP 3835199 B1 | 27-09-2023 | CA 3101537 A1 | 13-06-2021 |
| | | EP 3835199 A1 | 16-06-2021 |
| | | US 2021180525 A1 | 17-06-2021 |

EPO FORM P0459

For more details about this annex : see Official Journal of the European Patent Office, No. 12/82

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10072796 B